# EUROPEAN PATENT APPLICATION

(11) **EP 4 708 524 A1**
(43) Date of publication of application: **11.03.2026**
(21) Application number: 25193534.2
(22) Date of filing: 01.08.2025
(51) Int. Cl.: H01M 50/289, H01M 50/291, H01M 50/293, H01M 50/30, H01M 50/375

(54) **SECONDARY BATTERY**

(30) Priority: 13.08.2024 KR 20240108455
(71) Applicant: SAMSUNG SDI CO., LTD., Yongin-si, Gyeonggi-do 17084 (KR)
(72) Inventor: NAM, Joongwoo, 17084 Yongin-si, Gyeonggi-do (KR)
(74) Representative: Gulde & Partner

(57) **Abstract**

A secondary battery includes an electrode assembly having a first electrode plate, a second electrode plate, and a separator between the first electrode plate and the second electrode plate. A case accommodates the electrode assembly and includes a safety vent. A foaming agent is provided inside of the case, with the foaming agent being configured to generate gas for opening the safety vent.

## Description

### BACKGROUND

### 1. Field

The present disclosure relates to a secondary battery.

### 2. Description of the Related Art

A secondary battery may be charged and discharged, unlike a primary battery that is not rechargeable. Low capacity secondary batteries are used in small-sized electronic devices that are portable such as smartphones, feature phones, laptop computers, digital cameras, and camcorders. High capacity secondary batteries are widely used as power sources for driving motors in hybrid vehicles, electric vehicles, etc. and as batteries for storing electric power. A secondary battery includes an electrode assembly including a cathode and an anode, a case accommodating the electrode assembly, and an electrode terminal connected to the electrode assembly.

The above information disclosed in this background section is only for enhancement of understanding of the background of the disclosure and therefore it may contain information that does not form the related art that is already known to a person of ordinary skill in the art.

### SUMMARY

The present disclosure provides a secondary battery with improved stability.

However, the technical purpose to be solved by the present disclosure is not limited, and other objects not mentioned herein will be clearly understood by those skilled in the art from the following disclosure.

Additional aspects will be set forth in part in the description which follows and, in part, will be apparent from the description, or may be learned by practice of the presented embodiments of the disclosure.

According to an aspect of the present disclosure, provided is a secondary battery including an electrode assembly including a first electrode plate (e.g. a cathode), a second electrode plate (e.g. an anode), and a separator between the first electrode plate and the second electrode plate, a case accommodating the electrode assembly and including a safety vent, and a foaming agent disposed inside the case. The foaming agent includes at least one of azodicarbonamide (ADCA), modified azodicarbonamide, p,p'-oxybis(benzenesulfonyl hydrazide) (OBSH), or N,N-dinitrosopentamethylene tetramine (DNPT). Preferably, the foaming agent includes at least one of azodicarbonamide (ADCA), p,p'-oxybis(benzenesulfonyl hydrazide) (OBSH), and N,N-dinitrosopentamethylene tetramine (DNPT). The foaming agent is configured to generate gas for opening the safety vent in case of a thermal runaway of the secondary battery.

In a preferred embodiment, the foaming agent may be provided between the electrode assembly and the case.

In a preferred embodiment, the foaming agent may be configured to generate gas in an amount of 200 ml/g of the foaming agent to 300 ml/g of the foaming agent measured by thermogravimetric analysis.

In a preferred embodiment, the foaming agent may be included in a film-type foaming sheet.

In a preferred embodiment, the foaming sheet may be attached to an inner surface of the case.

In a preferred embodiment, the foaming sheet may have a thickness of 0.1 mm to 10 mm.

In a preferred embodiment, the foaming agent may be included in a foaming capsule.

In a preferred embodiment, the foaming capsule may at least include a thermal fusion polymer.

In a preferred embodiment, the foaming capsule may be configured to melt at a temperature of 80 °C to 100 °C measured by differential scanning calorimetry (DSC) according to DIN EN ISO 3146:2022-06.

In a preferred embodiment, the foaming capsule may include at least one of low density polyethylene (LDPE), ethylene-vinyl acetate copolymer (EVA), and acrylonitrile butadiene styrene copolymer (ABS).

In a preferred embodiment, the case includes a can accommodating the electrode assembly and a cap plate covering and sealing an upper portion of the can, wherein the safety vent is located in at least one of the can and the cap plate. The safety vent is configured to open by gas being generated by the foaming agent.

Preferably, the foaming agent may be provided between the electrode assembly and the can.

Further preferred, the foaming agent may be provided between the electrode assembly and the cap plate.

In a preferred embodiment, the foaming agent may be configured to generate gas at a temperature of 80 °C to 200 °C, preferably 80 °C to 100°C, more preferably 100 °C to 200 °C. In other words, the decomposition temperature of foaming agent may be in a temperature range of 80 °C to 200 °C. That means, when the foaming agent decomposes, it releases a gas, e.g. nitrogen gas in case of azodicarbonamide, p,p'-oxybis(benzenesulfonyl hydrazide) or N,N-dinitrosopentamethylene tetramine.

According to another aspect of the present disclosure, provided is a secondary battery including a safety vent for discharging internal gas, wherein the secondary battery includes an electrode assembly including a cathode, an anode, and a separator between the cathode and the anode, a case including a can accommodating the electrode assembly and a cap plate covering and sealing an upper portion of the can, and a heat-activated foaming agent configured to generate gas due, the safety vent is located in at least one of the can and the cap plate, and the safety vent may be configured to open by the gas generated by the foaming agent.

In the embodiment, the foaming agent may be provided between the electrode assembly and the can.

In the embodiment, the foaming agent may be provided between the electrode assembly and the cap plate.

In the embodiment, the foaming agent may be configured to generate gas at a temperature of 80 °C to 100 °C.

In the embodiment, the foaming agent may be included in a foaming film.

In the embodiment, the foaming film may be attached to an inner surface of the case.

In the embodiment, the foaming agent may be included in a foaming capsule.

In the embodiment, the foaming capsule may include a thermal fusion polymer.

In the embodiment, the foaming capsule may be configured to melt at a temperature of 80 °C to 100 °C.

### BRIEF DESCRIPTION OF THE DRAWINGS

The above and other aspects, features, and advantages of certain embodiments of the disclosure will be more apparent from the following description taken in conjunction with the accompanying drawings.

The accompanying drawings illustrate preferred embodiments of the present disclosure and together with the foregoing disclosure, serve to provide further understanding of the technical features of the present disclosure. But the present disclosure is not limited to embodiments depicted in the drawings.
FIG. 1 is a perspective view schematically showing an example of a secondary battery according to an embodiment of the present disclosure;
FIG. 2 is a cross-sectional view schematically showing an example of a cross-section taken along line I-I of FIG. 1;
FIG. 3 is a perspective view schematically showing an example of an electrode assembly of FIG. 2;
FIG. 4 is an exploded perspective view schematically showing a part of a secondary battery according to an embodiment of the present disclosure;
FIG. 5 is an exploded perspective view schematically showing a part of a secondary battery according to another embodiment of the present disclosure;
FIG. 6 is a cross-sectional view schematically showing a secondary battery according to another embodiment of the present disclosure;
FIG. 7 is a cross-sectional view schematically showing a foaming capsule according to an embodiment of the present disclosure;
FIG. 8 is an exploded perspective view schematically showing a secondary battery according to another embodiment of the present disclosure; and
FIG. 9 is an exploded perspective view schematically showing a secondary battery according to another embodiment of the present disclosure.

### DETAILED DESCRIPTION

Reference will now be made in detail to embodiments, examples of which are illustrated in the accompanying drawings, wherein like reference numerals refer to like elements throughout. In this regard, the present embodiments may have different forms and should not be construed as being limited to the descriptions set forth herein. Accordingly, the embodiments are merely described below, by referring to the figures, to explain aspects. As used herein, the term "and/or" includes any and all combinations of one or more of the associated listed items. Expressions such as "at least one of," when preceding a list of elements, modify the entire list of elements and do not modify the individual elements of the list.

Hereinafter, one or more embodiments of the present disclosure will be described in detail with reference to accompanying drawings. Prior to the description, it should be understood that the terms used in the specification and the appended claims should not be construed as limited to general and dictionary meanings, but interpreted based on the meanings and concepts corresponding to technical aspects of the present disclosure on the basis of the principle that the inventor is allowed to define terms appropriately for the best explanation. Therefore, the description herein is just a preferable example for the purpose of illustrations only and does not limit the scope of the disclosure in that other equivalents and modifications could be made thereto without departing from the scope of the disclosure.

In addition, it will be further understood that the terms that the terms "comprise or include" and/or "comprising or including," when used in this specification, specify the presence of stated features, numbers, steps, operations, elements, and/or components, but do not preclude the presence or addition of one or more other features, numbers, steps, operations, elements, components, and/or groups thereof. When the embodiments are described, the use of "may" signifies "at least one embodiment".

In addition, the accompanying drawings are not shown according to the actual scale to help understand the disclosure, but the dimensions of some components may be exaggerated. Furthermore, the same element in different embodiments may be given the same reference numeral.

The term equal refers to 'substantially equal'. Accordingly, substantially equal may include the deviation regarded as a low level in the corresponding technical field, for example, the deviation of 5% or less. In addition, a uniform parameter in a predetermined area may refer to uniform from the average point of view.

Expressions including ordinal numbers such as "first" and "second" indicate various elements, but the above expressions do not limit the elements. These terms are used to distinguish one element from another, and unless the context clearly indicates otherwise, a first element may be a second element.

As used herein, the singular forms are intended to include the plural forms as well, unless the context clearly indicates otherwise.

It will be understood that when an element is referred to being "on (or below)" or "above (or under)" another element, it may be positioned in contact with an upper surface (or a lower surface) of the other element, but another element may be positioned between the element and the other element on (or below) the element.

It will be further understood that when an element is referred to as being "connected", "coupled" or "joined" to another element, the elements may be directly connected or joined to each other, but intervening elements may be present between them or each element may be "connected", "coupled" or "joined" to each other through another element. It will be understood that when an element is referred to as being "electrically coupled" to another element, the element can be directly electrically coupled to another element or intervening elements may be present.

Throughout the specification, the terms "A and/or B" imply A, B, or A and B, unless otherwise defined. That is, the term "and/or" includes all or various combinations of a plurality of items that are related and arranged. The terms "C to D" imply C or more and D or less, unless otherwise described.

The terminology used herein is for the purpose of describing embodiments of the present disclosure and is not intended to be limiting of the present disclosure.

The exemplary embodiments will be described below in more detail with reference to the accompanying drawings. Those components that are the same or are in correspondence are rendered the same reference numeral regardless of the figure number.

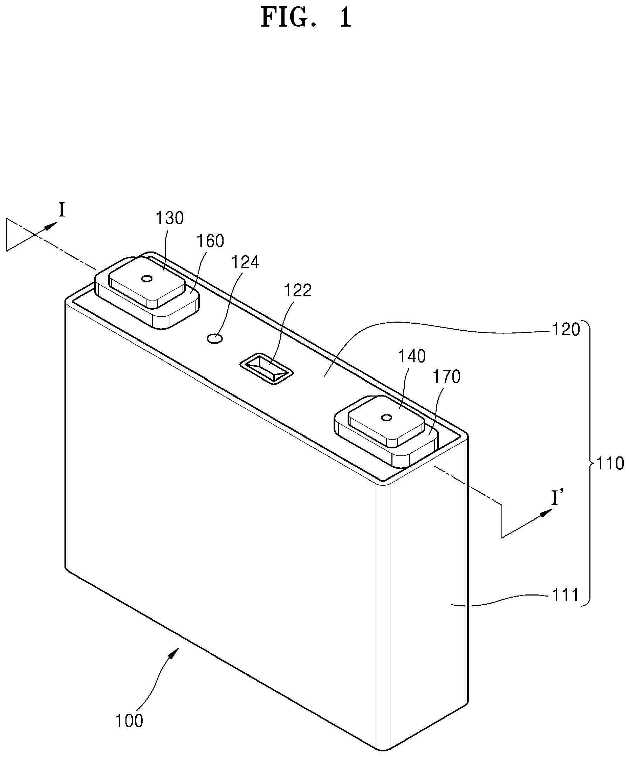

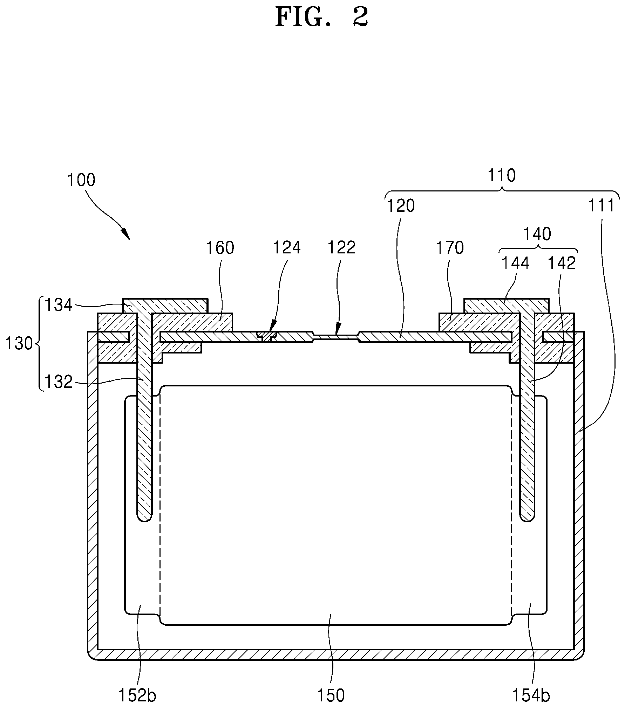

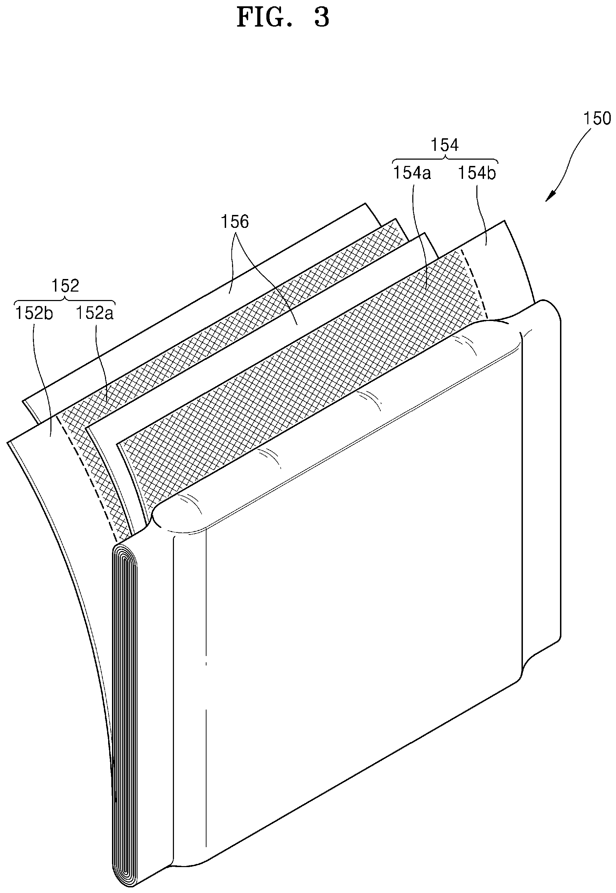

FIG. 1 is a perspective view schematically showing a secondary battery 100 according to an embodiment of the present disclosure, FIG. 2 is a cross-sectional view schematically showing an example of a cross-section taken along line I-I of FIG. 1, and FIG. 3 is a perspective view schematically showing an example of an electrode assembly 150 of FIG. 2.

Referring to FIGS. 1 to 3, a secondary battery 100 may include the electrode assembly 150, a case 110 forming the exterior of the secondary battery 100, and a first terminal portion 130 and a second terminal portion 140 coupled to the case 110. In addition, the secondary battery 100 includes a foaming agent in the case 110 so as to improve stability of the secondary battery 100.

The case 110 may include a can 111 accommodating the electrode assembly 150 and a cap plate 120 that hermetically seals the can 111 by sealing an upper portion of the can 111. The secondary battery 100 may also include a first insulator 160 between the cap plate 120 and the first terminal portion 130, and a second insulator 170 between the cap plate 120 and the second terminal portion 140.

The electrode assembly 150 may include a first electrode plate 152, a second electrode plate 154, and a separator 156 interposed between the first electrode plate 152 and the second electrode plate 154.

The electrode assembly 150 may be formed by sequentially stacking the first electrode plate 152, the separator 156, and the second electrode plate 154, as shown in FIG. 3, and then winding the stack in a jelly-roll shape. In other embodiments, the electrode assembly 150 may be manufactured by sequentially stacking the first electrode plate 152, the separator 156, and the second electrode plate 154 a plurality of times.

The first electrode plate 152 may include a first active material portion 152a on which a first active material is applied, and a first active material-non-coated portion 152b on which the first active material is not applied. The first active material portion 152a is formed by applying the first active material on a part of at least one surface of, for example, an aluminum plate. Another portion of the aluminum plate on which the first active material is not applied may be the first active material-non-coated portion 152b. The first active material may include a cathode active material such as a lithium-containing transition metal oxide, for example, LiCoO₂, LiNiO₂, LiMnO₂, and LiMnO₄, or a cathode active material such as a lithium chalcogenide compound.

The second electrode plate 154 may include a second active material portion 154a on which a second active material is applied, and a second active material-non-coated portion 154b on which the second active material is not applied. The second active material portion 154a is formed by applying the second active material on a part of at least one surface of, for example, a copper plate. Another portion of the copper plate on which the second active material is not applied may be the second active material-non-coated portion 154b. The second active material may be, for example, an anode active material. In detail, the second active material may include a carbon material such as crystalline carbon, amorphous carbon, carbon composite, and carbon fiber, lithium metal, or lithium alloy.

The separator 156 may be manufactured by coating at least one base material selected from the group consisting of, for example, polyethylene (PE), polystyrene (PS), polypropylene (PP), and a copolymer of PE and PP, with a polyvinylidene fluoride-hexafluoropropylene copolymer (PVDF-HFP copolymer). But the present disclosure is not limited to such examples.

In addition, when the first electrode plate 152, the separator 156, and the second electrode plate 154 are wound, the first electrode plate 152 and the second electrode plate 154 may be arranged to be out of line with each other based on the separator 156. As such, when the structures are wound, the first active material-non-coated portion 152b may be located at one end of the electrode assembly 150 and the second active material-non-coated portion 154b may be located at the other end of the electrode assembly 150. Thus, in the electrode assembly 150, the first active material-non-coated portion 152b and the second active material-non-coated portion 154b may be arranged at opposite edges based on the width direction of the electrode assembly 150.

The case 110 forms the entire exterior of the secondary battery 100 and may include the can 111 accommodating the electrode assembly 150 and the cap plate 120 hermetically sealing the can 111 by sealing the upper portion of the can 111. The can 111 may have an opening formed in the upper portion thereof so that the electrode assembly 150 may be accommodated therein. The can 111 may be formed of a conductive material such as aluminum or steel plated with an alloy or nickel. The case 110 protects the electrode assembly 150 against external impact and may function as a heat dissipation plate that discharges heat accompanied with charging/discharging operations of the electrode assembly 150.

The cap plate 120 may be formed as a thin plate including the same material as that of the can 111 and be formed to cover the opening of the can 111. The cap plate 120 is placed on one side of the can 111 after the electrode assembly 150 is accommodated in the can 111 and then is bonded to the can 111 via welding, etc. to seal the can 111.

The cap plate 120 may include a safety vent 122. The safety vent 122 is intended to open when the pressure in the case 110 becomes excessively high so that gas may be discharged from the battery. In addition, the safety vent 122 may be arranged in another part of the can 111 other than the cap plate 120. That is, the safety vent 122 may be located in at least one of the can 111 and the cap plate 120.

When a heat-activated foaming agent is disposed between the electrode assembly 150 and the case 110, the safety vent 122 may be operated before there is a thermal runaway of the secondary battery 100 to reduce the temperature of the secondary battery 100. Thus, thermal runaway may be delayed or prevented. As such, the stability of the secondary battery 100 may be improved.

The cap plate 120 may include an electrolyte inlet 124. After the cap plate 120 is coupled to the can 111, the electrolyte may be injected into the case 110 through the electrolyte inlet 124. After injection of the electrolyte is finished, the electrolyte inlet 124 may be sealed.

The first terminal portion 130 electrically connected to the first electrode plate 152 and the second terminal portion 140 electrically connected to the second electrode plate 154 protrude outward after passing through the cap plate 120. Also, outer circumferences of upper pillars of the first and second terminal portions 130 and 140 protruding out of the cap plate 120 may be threaded and fixed to the cap plate 120 via a nut. However, the present disclosure is not limited to such a configuration, and the first and second terminal portions 130 and 140 may be formed as rivet structures to be riveted or may be welded to the cap plate 120. Also, the first insulator 160 and the second insulator 170 may be formed between the cap plate 120 and the first terminal portion 130 and between the cap plate 120 and the second terminal portion 140, respectively.

The first terminal portion 130 may include a first current collector 132 and a first terminal plate 134 that is a region to which a bus bar of a flat shape is bonded, with the first current collector and the first terminal plate being integrally formed. The first terminal portion 130 may be formed of a first material. The first material may be, for example, aluminum that is the same as the material included in the first electrode plate 152.

The first current collector 132 passes through the first insulator 160 and is bonded to the first active material-non-coated portion 152b via welding, etc. In addition, because the first current collector 132 and the first active material-non-coated portion 152b may be both formed of aluminum, welding between the first current collector 132 and the first active material-non-coated portion 152b may provide for excellent bonding strength as a result of the same kind of metals being welded together. The first insulator 160 may insulate between the first terminal portion 130 and the cap plate 120, and between the first terminal portion 130 and the can 111.

The second terminal portion 140 may include a second current collector 142 and a second terminal plate 144 that is a region to which a bus bar of a flat shape is bonded, the second current collector and the second terminal plate being integrally formed.

The second current collector 142 passes through the second insulator 170 that insulates between the second terminal portion 140 and the cap plate 120 and between the second terminal portion 140 and the can 111. The second current collector 142 is bonded to the second active material-non-coated portion 154b via welding, etc. In addition, because the second current collector 142 and the second active material-non-coated portion 154b may be both formed of copper, the welding between the second current collector 142 and the second active material-non-coated portion 154b may provide excellent bonding strength as a result of the same kind of metals being welded together. The second insulator 170 insulates between the second terminal portion 140 and the cap plate 120 and between the second terminal portion 140 and the can 111.

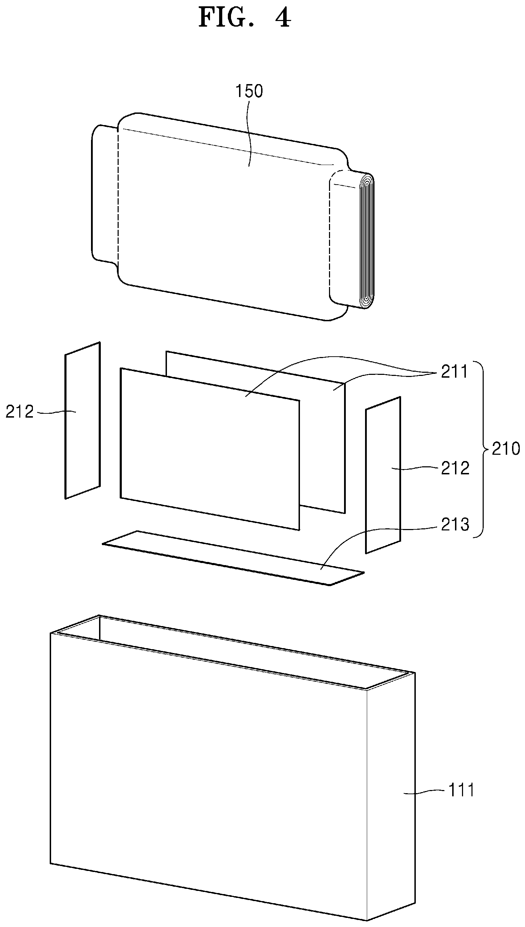

FIG. 4 is an exploded perspective view schematically showing a part of the secondary battery 100 according to an embodiment of the present disclosure.

In the secondary battery 100, a foaming sheet 210 in a film shape may be disposed on the inner surface of the case 110 between the case 110 and the electrode assembly 150. The foaming sheet 210 may include a heat-activated foaming agent that generates the gas.

The secondary battery 100 may have the structure and effects that are the same as or similar to those described above with reference to FIGS. 1 to 3. In particular, the secondary battery 100 may include the safety vent 122 in a part of the case 110, for example, part of the cap plate 120 or the can 111, in order to discharge the gas generated from the secondary battery 100.

When heat is generated in the secondary battery 100, the electrolyte may decompose and generates the gas. Thus, the pressure in the secondary battery 100 increases and the safety vent 122 may open, e.g., break, to dissipate the heat and gas. However, when an insufficient amount of gas is generated to open the safety vent 122, the heat may nevertheless may start to be generated in the secondary battery 100, and the thermal runaway of the corresponding secondary battery 100 may not be prevented. Further, the heat may be transferred to adjacent secondary batteries 100, to thereby generate successive thermal runaways. But according to embodiments of the present disclosure, the foaming agent is included in the secondary battery 100, and, thus, successive thermal runaways of the secondary batteries 100 may be prevented to thereby achieve stability.

The foaming agent is included in the secondary battery 100 generates gas before the temperature in the secondary battery 100 rapidly rises, so that the safety vent 122 opens. The temperature of the secondary battery 100 therefore may be reduced. In more detail, the foaming agent may increase an internal pressure of the secondary battery 100 to an operating pressure of the safety vent 122 in order to open (e.g., break) the safety vent 122 before the thermal runaway of the secondary battery 100. In other words, the foaming agent may advance the operation of the safety vent 122 before the thermal runaway of the secondary battery 100 so as to dissipate the heat from the secondary battery 100, and, thus, thermal runaway may be delayed or prevented.

The foaming agent may not generate gas during the normal use of the secondary battery 100, whereas the foaming agent generates the gas at a high temperature in order to open the safety vent 122 before thermal runaway of the secondary battery 100. Thus, the foaming agent may generate the gas at a temperature that is higher than a usual operating temperature of the secondary battery 100 and less than the thermal runaway temperature of the secondary battery 100. In example embodiments, the foaming agent may start to generate gas at a temperature ranging from 80 °C to 100 °C.

The arrangement type and amount of the foaming agent may be adjusted according to the internal space of the case 110 accommodating the electrode assembly 150.

In order to maximize packing efficiency and reduce the weight of the secondary battery 100, a foaming agent that has less volume and weight and generates enough gas to open the safety vent 122 before the thermal runaway may be used in the secondary battery 100. For example, a foaming agent capable of generating the gas of 200 ml to 300 ml per mass (g) of the foaming agent may be used. This parameter is measured using the thermogravimetric analysis (TGA) method. The temperature was increased at a rate of 5°C/min and held at 200°C for 10 minutes. The measured mass loss was then converted to gas volume according to the ideal gas law under standard temperature and pressure (STP) conditions. Under these conditions, the foaming agent according to the present invention generated approximately 200 to 300 ml of gas per gram. As a further example, when a volume inside the case 110 (without the electrode assembly 150) is 1L, the foaming agent may be arranged so that the gas generation amount may be 200 ml to 300 ml.

The foaming agent may at least include liquefied hydrocarbon. The foaming agent includes at least one of azodicarbonamide (ADCA), p,p'-oxybis(benzenesulfonyl hydrazide) (OBSH), or N,N-dinitrosopentamethylene tetramine (DNPT). Preferably, the foaming agent may be selected from at least one of the group comprising azodicarbonamide (ADCA), p,p'-oxybis(benzenesulfonyl hydrazide) (OBSH), and N,N-dinitrosopentamethylene tetramine (DNPT).

The foaming sheet 210 may be formed as a film type and may include the foaming agent capable of generating the gas and opening the safety vent 122. The foaming sheet 210 may be, for example, a film applied with the foaming agent. In another example, the foaming sheet 210 may be a film in which the foaming agent is evenly distributed.

In order to increase the volume ratio and reduce the weight of the secondary battery 100, the foaming sheet 210 may be as thin as possible to thereby have less volume. The thickness of the foaming sheet 210 may be, for example, 0.1 mm to 10 mm.

The foaming sheet 210 may be located between the case 110 and the electrode assembly 150. In some embodiments, the foaming sheet 210 may be attached to the inner surface of the case 110. In detail, the foaming sheet 210 may be disposed on the inner surface of the can 111 or a lower surface of the cap plate 120. The foaming sheet 210 may include a front sheet 211 that is disposed on the inner surface of the can 111, which corresponds to a main surface that is the largest surface of the secondary battery 100, side sheets 212 disposed on the inner surfaces of the can 111, which correspond to the side surfaces of the secondary battery 100, and/or a bottom sheet 213 disposed on the inner surface of the can 111, which corresponds to the bottom surface of the secondary battery 100.

The foaming sheet 210 may be disposed between the cap plate 120 and the electrode assembly 150, for example, on the bottom surface of the cap plate 120, as well as on the front sheet 211, the side sheets 212, and the bottom sheet 213. In alternative embodiments, the foaming sheet 210 may be disposed on one surface of an insulation plate when the secondary battery 100 includes the insulation plate (not shown) between the cap plate 120 and the electrode assembly 150.

In example embodiments, the foaming sheet 210 may only include one of the front sheet 211, the side sheets 212, and the bottom sheet 213. In other example embodiments, the foaming sheet 210 may include two front sheets 211 and the side sheets 212. In addition, in other embodiments, the foaming sheet 210 may be modified various ways, e.g., the foaming sheet 210 may only include the sheet attached to the cap plate 120 or the insulation plate (not shown).

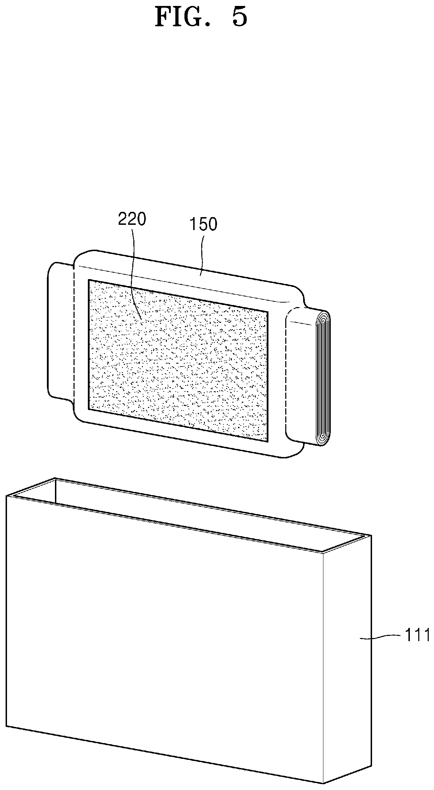

FIG. 5 is an exploded perspective view schematically showing a part of the secondary battery according to another embodiment of the present disclosure.

In the secondary battery 100, a foaming sheet 220 of a film type may be disposed between the case 110 and the electrode assembly 150. More specifically, the foaming sheet 220 may be disposed on one surface of the electrode assembly 150. The foaming sheet 220 may include a heat-activated foaming agent that generates the gas.

The foaming sheet 220 is formed in a film shape and may include a foaming agent that may open (e.g., break) the safety vent 122 by generating gas. The foaming sheet 220 may be, for example, a film applied with the foaming agent, and may be a film in which the foaming agent is evenly distributed.

The secondary battery 100 may have the structure and effects that are the same as or similar to those described above with reference to FIGS. 1 to 3. The secondary battery 100 may include the safety vent 122 in a part of the case 110, for example, part of the cap plate 120 or the can 111, in order to discharge gas generated from the secondary battery 100. Also, the foaming agent included in the foaming sheet 220 may have a type, mass, volume, effects, functions, etc. that are the same as or similar to those described above with reference to FIG. 4. The foaming agent may generate gas so as to operate the safety vent 122 and dissipate heat from the secondary battery 100 before thermal runaway of the secondary battery 100.

The foaming agent may be configured to not generate gas at temperatures at which the secondary battery 100 is normally used but may generate the gas at a temperature before thermal runaway of the secondary battery 100 takes place.

It is desirable for the secondary battery 100 to have less weight and less volume. To this end, a foaming agent may be used that is capable of generating the gas of an amount that is enough to operate the safety vent 122 with reduced weight and volume before the thermal runaway.

The foaming sheet 220 is formed in the film shape and may include the foaming agent that operates the safety vent 122 by generating the gas as a result of heat or pressure. The foaming sheet 220 may be disposed between the case 110 and the electrode assembly 150, more specifically, on at least one surface of the electrode assembly 150. In alternative embodiments, the electrode assembly 150 may be covered with an insulating layer in order to prevent short circuits with the case 110 and other components of the secondary battery 100, and the foaming sheet 220 may be attached to the insulating layer.

In order to increase the volume ratio and reduce the weight of the secondary battery 100, the foaming sheet 220 may be as thin as possible to have small volume. For example, the thickness of the foaming sheet 220 may be 0.1 mm to 10 mm.

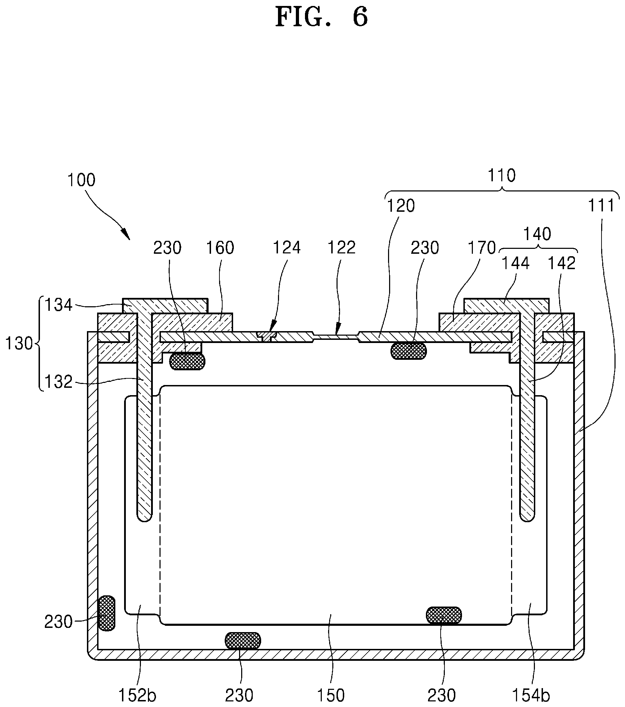

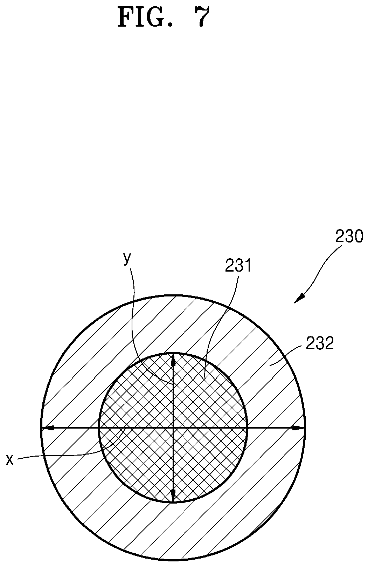

FIG. 6 is a cross-sectional view schematically showing a secondary battery 100 according to another embodiment of the present disclosure, and FIG. 7 is a cross-sectional view schematically showing a foaming capsule 230 according to an embodiment of the present disclosure.

Referring to FIGS. 6 and 7, the secondary battery 100 may include foaming capsules 230 in the case 110. Each of the foaming capsules 230 may include a foaming agent 231 and a capsule 232 surrounding the foaming agent. In specific examples, the foaming agent may have a core-shell structure.

The secondary battery 100 may have the structure and effects that are the same as or similar to those described above with reference to FIGS. 1 to 3. The secondary battery 100 may include the safety vent 122 in a part of the case 110, for example, a part of the cap plate 120 or the can 111, in order to discharge gas generated from the secondary battery 100. Also, the foaming agent 231 in the foaming capsule 230 may be the same as the foaming agent described above with reference to FIG. 4. The foaming agent 231 may generate gas so as to operate the safety vent 122 and dissipate heat from the secondary battery 100 before thermal runaway of the secondary battery 100. The foaming agent 231 may have a liquid phase.

The foaming capsule 230 may be configured to not generate the gas at temperatures at which the secondary battery 100 is normally used, and the foaming capsule 230 may generate the gas to operate the safety vent 122 at a temperature before thermal runaway of the secondary battery 100 occurs.

To this end, the capsule 232 may at least include a thermal fusion polymer and, in an embodiment, the capsule 232 may include a material (polymer) that is melted at a temperature of 80 °C to 100 °C. The melting point was measured using Differential Scanning Calorimetry (DSC) according to DIN EN ISO 3146:2022-06. The results indicated that the melting point is in the range of approximately 80°C to 100°C. In another embodiment, the capsule 232 may include at least one of low density polyethylene (LDPE), ethylene-vinyl acetate copolymer (EVA), and acrylonitrile butadiene styrene copolymer (ABS). When the capsule 232 is melted at a temperature of 80 °C to 100 °C, the foaming agent may generate gas and open the safety vent 122. That is, the foaming agent may generate the gas at a temperature of 80 °C to 100 °C.

It is desirable that the secondary battery 100 have less weight and less volume. To this end, the foaming capsule 230 may be provided with reduced weight and volume and such that the foaming capsule 230 is capable of generating enough gas to operate the safety vent 122 before thermal runaway of the secondary battery 100. A diameter x of the foaming capsule 230 may be, for example, 5 µm to 50 µm. Here, the diameter x of the foaming capsule 230 may denote a length of a longer axis when a cross-section of the foaming capsule 230 has an elliptical shape. Also, a diameter y of the foaming agent 231 may be 3 µm to 35 µm. Here, the diameter y of the foaming agent 231 denotes a length of a longer axis when a cross-section of the foaming agent 231 has an elliptical shape.

The foaming capsules 230 may be provided in the case 110 of the secondary battery 100. The foaming capsules 230 may be attached to a main surface, side surface, or inner surface of a lower surface of the case 110, may be attached to the electrode assembly 150, and may be attached to the lower surface of the cap plate 120 or lower surfaces of the insulators 160 and 170. Also, although not shown in FIG. 6, when the secondary battery 100 further includes the insulation plate between the cap plate 120 and the electrode assembly 150, foaming capsules 230 may be attached to the upper surface or lower surface of the insulation plate.

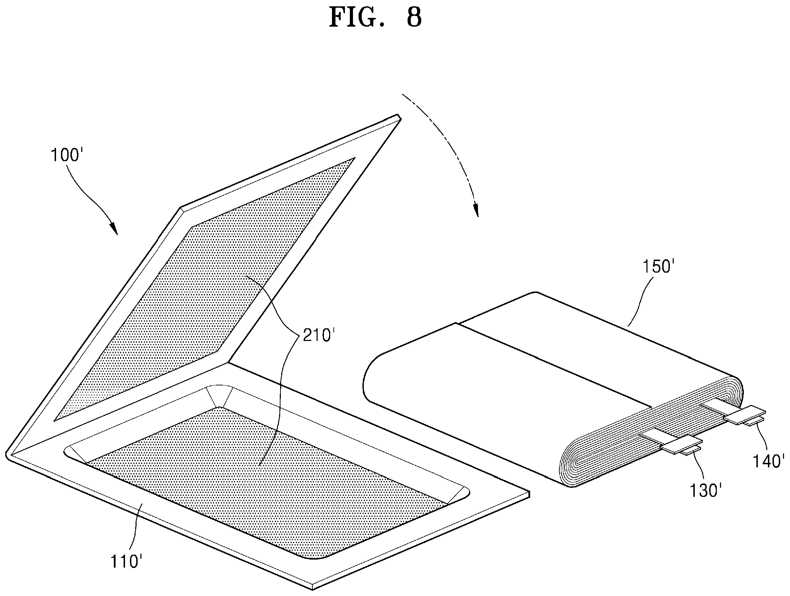

FIG. 8 is an exploded perspective view schematically showing a secondary battery 100' according to another embodiment of the present disclosure.

As shown in FIG. 8, the secondary battery 100' may include an electrode assembly 150', a case 110' accommodating the electrode assembly 150', and foaming sheets 210' attached to inner surfaces of the case 110'.

The electrode assembly 150' may have a structure that is the same as or similar to the electrode assembly 150 described above with reference to FIGS. 1 to 3.

A first active material non-coated portion and a second active material non-coated portion may be welded to a first lead 130' and a second lead 140' of an outer terminal to be electrically connected to the outside. A tab film is attached to each of the first lead 130' and the second lead 140' for insulating from the case 110'.

The case 110' is sealed by abutting sealing portions at edges thereof while accommodating the electrode assembly 150' therein. Here, the sealing is performed while the tab film is disposed between the sealing portions.

The sealing portion of the case 110' is formed of a thermal fusion material and sealing is made by adhering thermal fusion layers to each other. Because the thermal fusion material generally has a weak adhesion to metal, the tab film in a thin film shape is attached to the active material-non-coated portion and then fused to the case 110'.

The secondary battery 100' may include a safety vent (not shown). For example, the safety vent may be provided in the form of a fine slit or a tiny hole in one surface of the case 110' or the sealing portion of the case 110'. When gas is generated in the case 110' and the pressure increases, the gas may be discharged through the opened fine slit or tiny hole, that is, the safety vent.

The foaming sheet 210' of a film type may include a foaming agent that generates gas due to heat or pressure so as to open (e.g., break) the safety vent. The foaming sheet 210' may be, for example, a film applied with the foaming agent, and in another example, may be a film in which the foaming agent is evenly distributed.

The foaming agent may generate gas so as to operate the safety vent and dissipate heat from the secondary battery 100' before thermal runaway of the secondary battery 100'. The foaming agent included in the foaming sheet 210' may generate the gas before the thermal runaway of the secondary battery 100' so as to operate the safety vent, and the foaming agent may be the same as the foaming agent described above with reference to FIG. 4. That is, the foaming agent does not generate gas at temperatures at which the secondary battery 100' is normally used and may generate the gas at a temperature before the thermal runaway of the secondary battery 100' occurs.

It is desirable for the secondary battery 100' to have less weight and volume. Thus, a foaming agent may be selected that has a small weight and volume and is capable of generating enough gas to operate the safety vent before thermal runaway of the secondary battery 100' and having small weight and volume.

The foaming sheet 210' may be attached between the case 110' and the electrode assembly 150', e.g., to at least one of the largest inner surfaces of the case 110'. In another example, the foaming sheet 210' may be attached to at least one surface of the electrode assembly 150'. When the electrode assembly 150' has an insulating layer surrounding the outer surface thereof, the foaming sheet 210' may be attached to one surface of the insulating layer.

In order to increase the volume ratio and reduce the weight of the secondary battery 100', the foaming sheet 210' may be as thin as possible to have small volume. For example, the thickness of the foaming sheet 210' may be 0.1 mm to 10 mm.

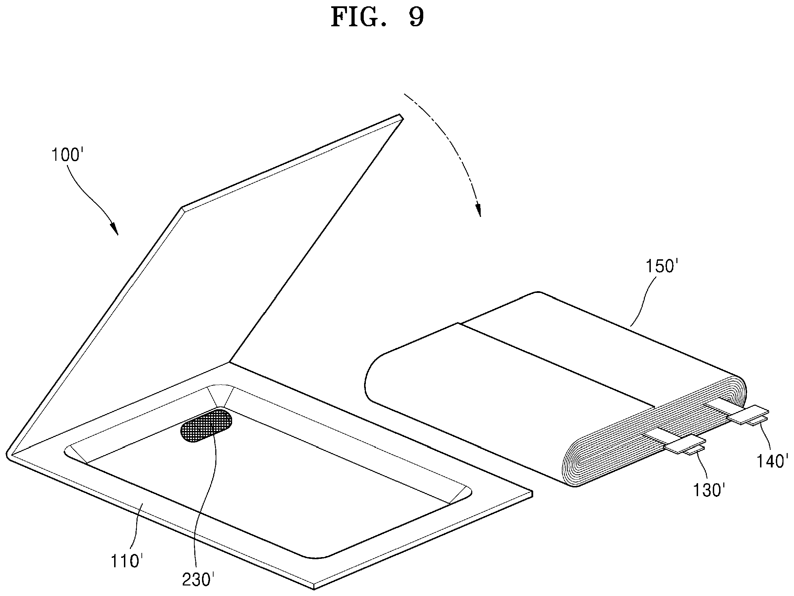

FIG. 9 is an exploded perspective view schematically showing the secondary battery 100' according to another embodiment of the present disclosure.

The secondary battery 100' may include the electrode assembly 150', the case 110' accommodating the electrode assembly 150', and a foaming capsule 230' disposed on an inner surface of the case 110'.

The secondary battery 100' may have the structure and effects that are the same as or similar to those of the case 110' and the electrode assembly 150' described above with reference to FIG. 8. Also, the electrode assembly 150' may have a structure that is the same as or similar to that of the electrode assembly 150 described above with reference to FIGS. 1 to 3.

The secondary battery 100' may include a safety vent (not shown). For example, the safety vent may be provided in the form of a fine slit or a tiny hole in one surface of the case 110' or the sealing portion of the case 110'. When gas is generated in the case 110' and the pressure increases, the gas may be discharged through the fine slit or tiny hole, that is, the safety vent.

The foaming capsule 230' may include a foaming agent and a capsule surrounding the foaming agent. The foaming capsule 230' may have, for example, a core-shell structure. The foaming agent and capsule included in the foaming capsule 230' may be the same as the foaming agent 231 and the capsule 232 described above with reference to FIGS. 6 and 7. The foaming capsule 230' may be disposed inside of the case 110'. In particular, the foaming capsule 230' may be disposed in a space remaining after the electrode assembly 150' is accommodated in the case 110'.

Because the safety vent opens due to the operation of the foaming agent before thermal runaway of the secondary battery 100', the heat from the secondary battery 100' may be dissipated, and the stability of the secondary battery 100' may be further improved.

The present disclosure has been described in detail. However, it should be understood that the detailed description and specific examples, while indicating preferred embodiments of the disclosure, are given by way of illustration only, since various changes and modifications within the scope of the disclosure will become apparent to one of ordinary skill in the art from this detailed description.

According to embodiments of the present disclosure, the foaming agent is included in the secondary battery, and thus, the safety vent opens before thermal runaway of the secondary battery to dissipate heat, and the temperature is lowered so as to delay or prevent the thermal runaway.

Effects obtainable from the present disclosure are - not limited to the above-mentioned effects. Other unmentioned effects may be clearly understood from the following description by one of ordinary skill in the art to which the present disclosure pertains.

It should be understood that embodiments described herein should be considered in a descriptive sense only and not for purposes of limitation. Descriptions of features or aspects within each embodiment should typically be considered as available for other similar features or aspects in other embodiments. While one or more embodiments have been described with reference to the figures, it will be understood by those of ordinary skill in the art that various changes in form and details may be made therein without departing from the scope as defined by the present disclosure.

## Claims

1. A secondary battery (100, 100') comprising:
an electrode assembly (150, 150') including a first electrode plate (152), a second electrode plate (154), and a separator (156) between the first electrode plate (152) and the second electrode plate (154);
a case (110, 110') accommodating the electrode assembly (150, 150') and including a safety vent (122); and
a foaming agent (231) disposed inside the case (110, 110'),
wherein the foaming agent (231) includes at least one of azodicarbonamide, modified azodicarbonamide, p,p'-oxybis(benzenesulfonyl hydrazide), and N,N-dinitrosopentamethylene tetramine.

2. The secondary battery (100, 100') of claim 1, wherein the foaming agent (231) is provided between the electrode assembly (150, 150') and the case (110, 110').

3. The secondary battery (100, 100') of one of claims 1 or 2, wherein the foaming agent (231) is configured to generate gas in an amount of 200 ml/g of the foaming agent to 300 ml/g of the foaming agent measured by thermogravimetric analysis.

4. The secondary battery (100, 100') of the preceding claims, wherein the foaming agent (231) is included in a film-type foaming sheet (210, 210', 220).

5. The secondary battery (100, 100') of at least one of claims 1 to 3, wherein the foaming agent (231) is included in a foaming capsule (230, 230').

6. The secondary battery (100, 100') of claim 5, wherein the foaming capsule (230, 230') comprises at least one thermal fusion polymer.

7. The secondary battery (100, 100') of claim 6, wherein the at least one thermal fusion polymer is selected from the group comprising: low density polyethylene, ethylene-vinyl acetate copolymer, and acrylonitrile butadiene styrene copolymer.

8. The secondary battery (100, 100') of one of claims 5 to 7, wherein the foaming capsule (230, 230') comprises a material, preferably the at least one thermal fusion polymer, with a melting point at a temperature of 80 °C to 100 °C measured by differential scanning calorimetry according to DIN EN ISO 3146:2022-06.

9. The secondary battery (100, 100') of one of the preceding claims, wherein the case (110, 110') includes a can (111) accommodating the electrode assembly (150, 150') and a cap plate (120) covering and sealing an upper portion of the can (111); and
wherein the safety vent (122) is located in at least one of the can (111) and the cap plate (120), and the safety vent (122) is configured to open by gas being generated by the foaming agent (231).

10. The secondary battery (100, 100') of claim 9, wherein the foaming agent (231) is provided between the electrode assembly (150, 150') and the can (111).

11. The secondary battery (100, 100') of claims 9 or 10, wherein the foaming agent (231) is provided between the electrode assembly (150, 150') and the cap plate (120).

12. The secondary battery (100, 100') of one of the preceding claims, wherein the foaming agent (231) is configured to generate gas at a temperature of 80 °C to 100 °C.
